# EUROPÄISCHE PATENTANMELDUNG

(11) **EP 3 300 598 A1**
(43) Veröffentlichungstag der Anmeldung: **04.04.2018**
(21) Anmeldenummer: 17401090.0
(22) Anmeldetag: 24.08.2017
(51) Int. Cl.: A01M 7/00

(54) **VERFAHREN UND SPRITZVORRICHTUNG ZUM AUSBRINGEN EINER SPRITZFLÜSSIGKEIT AUF EINER LANDWIRTSCHAFTLICHEN FLÄCHE**

(30) Priorität: 29.09.2016 DE 102016118444
(71) Anmelder: Amazonen-Werke H. Dreyer GmbH & Co. KG, 49205 Hasbergen (DE)
(72) Erfinder: Klemann, Timo, 49191 Belm (DE); Davy, Mikaël, 28700 Auneau (FR)

(57) **Zusammenfassung**

Die Erfindung betrifft ein Verfahren und eine Spritzvorrichtung zum Ausbringen einer Spritzflüssigkeit auf einer insbesondere landwirtschaftlichen Fläche. Die Spritzvorrichtung, insbesondere Feldspritze (10), weist wenigstens ein Spritzgestänge (11) mit wenigstens einer, vorzugsweise mehreren Spritzdüsen (12) für die Spritzflüssigkeit auf, wobei ein als Spritzhöhe (20) bezeichneter Abstand der wenigstens einen Spritzdüse (12) vom Untergrund (14), insbesondere Erdboden, beziehungsweise vom Pflanzenbewuchs (15) mittels wenigstens einer Höhenverstellungseinrichtung (21) eingestellt wird. Die Erfindung zeichnet sich dadurch aus, dass die Spritzhöhe (20) automatisch in Abhängigkeit von Eigenschaften der wenigstens einen aktiven Spritzdüse (12) eingestellt wird.

## Beschreibung

Die Erfindung betrifft ein Verfahren zum Ausbringen einer Spritzflüssigkeit auf einer insbesondere landwirtschaftlichen Fläche gemäß dem Oberbegriff des Anspruchs 1. Des Weiteren betrifft die Erfindung eine Spritzvorrichtung, insbesondere eine Feldspritze, gemäß dem Oberbegriff des Anspruchs 15.

Spritzvorrichtungen wie insbesondere Feldspritzen dienen dazu, eine Spritzflüssigkeit auf einer vorzugsweise landwirtschaftlichen Fläche auszubringen, also beispielsweise einem Feld, einem Acker oder ähnlichem.

Dazu weist die Spritzvorrichtung typischerweise wenigstens einen Vorratstank für eine oder mehrere Spritzflüssigkeiten auf. Diese Spritzflüssigkeit kann dann mittels wenigstens einer Spritzdüse, in der Regel aber einer Mehrzahl oder Vielzahl von Spritzdüsen, gefördert werden und durch die Spritzdüsen verspritzt werden. Die Spritzdüsen sind entlang eines Spritzgestänges angeordnet. Das in der Regel für den Transport faltbare Spritzgestänge ist im ausgebreiteten Zustand typischerweise linear und üblicherweise rechtwinklig zur Fahrtrichtung angeordnet.

Um eine möglichst homogene Verteilung der Spritzflüssigkeit auf dem Untergrund wie insbesondere dem Erdboden, beziehungsweise dem darauf befindlichen Pflanzenbewuchs zu erreichen, sind die Spritzdüsen zur fein verteilten Abgabe der Spritzflüssigkeit ausgebildet. Abhängig von der jeweiligen Viskosität der Spritzflüssigkeit wie auch vom gewünschten Verteilungsgrad der Spritzflüssigkeit sind üblicherweise unterschiedliche Spritzdüsen an einer Spritzvorrichtung vorgesehen. Diese können alternativ oder auch gemeinsam einsetzt werden. Zwischen den Spritzdüsen kann üblicherweise umgeschaltet werden, so dass die Auswahl einer oder mehrerer aktiver Spritzdüsen zur Abgabe von Spritzflüssigkeit nahezu jederzeit variabel ist.

Beim Verlassen der Spritzdüsen bildet sich ein sogenannter Spritzfächer aus Spritzflüssigkeit aus. Dies resultiert aus der sich nach dem Verlassen der Spritzdüse in vorwiegend seitlicher Richtung fächerartig ausbreitenden Flüssigkeit. Damit die Fläche möglichst gleichmäßig mit Spritzflüssigkeit versorgt wird, sind die Spritzdüsen daher in regelmäßigen Abständen am Spritzgestänge angeordnet. Die Spritzfächer benachbarter oder naher Spritzdüsen überlappen sich so je nach Abstand zum Untergrund dabei teilweise sogar mehrfach.

Nachteilig an den bekannten Verfahren und Spritzvorrichtungen zum Ausbringen von Spritzflüssigkeit ist dabei, dass bei jedem Wechsel der Spritzflüssigkeit wie auch der aktiven Spritzdüsen eine manuelle Korrektur der Spritzhöhe erforderlich ist. Hierdurch kann es häufig zu Fehlbedienungen kommen.

Es ist daher eine Aufgabe der Erfindung, die Nachteile des Standes der Technik zu beseitigen. Insbesondere soll die aufwändige und fehleranfällige Anpassung der Spritzhöhe an die jeweils aktuellen Gegebenheiten des Ausbringvorgangs vereinfacht werden.

Ein Verfahren mit den Merkmalen des Anspruchs 1 löst diese Aufgabe. Das Verfahren dient zum Ausbringen einer Spritzflüssigkeit auf einer insbesondere landwirtschaftlichen Fläche. Es ist hierzu eine Spritzvorrichtung, insbesondere eine Feldspritze, vorgesehen mit wenigstens einem Spritzgestänge mit wenigstens einer, vorzugsweise mehreren Spritzdüsen für die Spritzflüssigkeit. Ein als Spritzhöhe bezeichneter Abstand der wenigstens einen Spritzdüse vom Untergrund beziehungsweise vom Pflanzenbewuchs wird mittels wenigstens einer Höhenverstellungseinrichtung eingestellt. Das Verfahren zeichnet sich dabei dadurch aus, dass die Spritzhöhe automatisch eingestellt wird. Hierdurch werden Benutzereingriffe reduziert, so dass die Fehleranfälligkeit reduziert und die Genauigkeit erhöht wird.

Vorzugsweise wird die Spritzhöhe durch die Spritzvorrichtung eingestellt. Weiter vorzugsweise erfolgt dies durch Verstellen der wenigstens einen Höhenverstellungseinrichtung. Die Einstellung wird damit unmittelbar an der dafür vorgesehenen Einrichtung der Spritzvorrichtung vorgenommen.

Die Spritzhöhe wird insbesondere abhängig von den aktiven beziehungsweise ausgewählten Spritzdüsen eingestellt, vorzugsweise den Spritzfächern der aktiven Spritzdüsen. Damit wird erfindungsgemäß eine Anpassung der Spritzhöhe an die Spritzdüsen vorgenommen. Ein Wechsel der Spritzdüsen und/oder wichtige Parameter der Spritzflüssigkeit oder der Umgebung, wie beispielsweise Viskosität, Dichte, Temperatur wie auch Windrichtung und/oder Windgeschwindigkeit werden vorzugsweise automatisch erfasst. So kann ausgehend davon eine kontinuierliche Anpassung der Spritzhöhe sichergestellt werden.

Insbesondere wird die Spitzhöhe abhängig vom Druck der Spritzflüssigkeit und/oder von der Ausbringmenge und/oder der Durchflussrate eingestellt. Dies sind abgesehen von der Ausbildung der Spritzdüse die wichtigsten Parameter, die Form und Größe des jeweiligen Spritzfächers bestimmen. Damit lässt sich direkt Einfluss auf die Verteilung der Spritzflüssigkeit nehmen.

Bevorzugt erfolgt die Einstellung der Spritzhöhe motorisch und/oder hydraulisch und/oder pneumatisch. Besonders bevorzugt ist dazu wenigstens ein hydraulischer und/oder pneumatischer Antrieb vorgesehen. Damit kann eine sichere und präzise Steuerung der Verstellung beziehungsweise Anpassung der Spritzhöhe sichergestellt werden.

Bei einer Änderung der aktivierten Spitzdüsen wird vorzugsweise automatisch eine Einstellung beziehungsweise Anpassung der Spritzhöhe vorgenommen. Die Spritzdüsen, vorzugsweise die Spritzdüsen einer Spritzdüseneinheit, werden besonders bevorzugt mittels wenigstens einer insbesondere drehbar gelagerten Steuerscheibe ausgewählt und/oder aktiviert. Mehrere in der Regel verschiedene Spritzdüsen sind dazu vorzugsweise in einer Spritzdüseneinheit zusammengefasst. Vorzugsweise werden die Spritzdüsen elektrisch aktiviert, vorzugsweise elektromotorisch. Die elektromotorische Ansteuerung erfolgt bevorzugt im Niedervoltbereich, vorzugsweise bei einer Spannung von zwischen -100 V und 100 V, bevorzugt zwischen 0 V und 50 V, insbesondere 12 V. Die Änderung der aktivierten Düsen kann hierbei vorteilhaft mittels einer einzigen Steuerleitung pro Spritzdüseneinheit erfolgen. Bei einer parallelen Verstellung aller Düsen des Gestänges kann dies auch beispielsweise mit einer einzigen Steuerleitung pro Gestängeseite erfolgen. Die Änderung der aktivierten Düsen kann jedoch alternativ zur Spritzdüseneinheit, bei der mehrere Düsen in einem Düsenkörper zusammengefasst sind, auch mittels einer separaten Ansteuerung von unabhängigen Düsen erfolgen. Ebenfalls kann dies alternativ zum elektrischen Antrieb mittels eines hydraulischen oder pneumatischen Antriebs erfolgen.

Bevorzugt wird die Spritzhöhe anhand gespeicherten Daten ermittelt und/oder eingestellt. Dies erfolgt vorzugsweise anhand von in der Spritzeinrichtung beziehungsweise in wenigstens einem Steuerungsrechner der Spritzeinrichtung gespeicherter Daten. Somit wird das auf reinen Erfahrungswerten basierende Ermitteln der korrekten Spritzhöhe durch eine Berechnung auf solider Datenbasis ersetzt. Der Steuerungsrechner befindet sich hierzu bevorzugt an der Spritzeinrichtung. Im Steuerungsrechner beziehungsweise einem Speicher desselben können auch mehrere Höheneinstellungen pro Spritzdüse hinterlegt sein. Diese können für eine Mehrfachüberlappung der Spritzdüsen vorgesehen sein. So kann beispielsweise ein erster Höhenwert vorgesehen sein, bei dessen Einstellung zumindest annähernd jeder Ort unterhalb des Gestänges vorzugsweise von genau einer Spritzdüse besprüht wird. Es kann ein zweiter Höhenwert vorgesehen sein, bei dessen Einstellung zumindest annähernd jeder Ort vorzugsweise von genau zwei Spritzdüsen besprüht wird und so weiter.

In der Spritzeinrichtung beziehungsweise in wenigstens einem Steuerungsrechner werden vorzugsweise mehrere Profile, insbesondere als Benutzerprofile, gespeichert. Vorzugsweise werden in jedem Profil separat zumindest die für die Einstellung der Spritzhöhen erforderlichen Daten gespeichert. Vorzugsweise kann zwischen den Benutzerprofilen automatisch und/oder manuell umgeschaltet werden. Auf diese Weise lassen sich die Einstellungen selber beziehungsweise die zur Einstellung der Spritzhöhe erforderlichen Daten direkt in der Spritzeinrichtung zugreifbar halten. So kann auf einfache Weise die automatische Anpassung der Spritzhöhe vorgenommen werden. Insbesondere können für dieselbe Spritzdüse beziehungsweise für Spritzdüsen desselben Typs auf diese Weise mehrere Werte für die Spritzhöhe, vorzugsweise je nach persönlicher Vorliebe des jeweiligen Benutzers, ausgewählt werden.

Ausgehend von der eingestellten Spritzhöhe wird eine aktive Regelung des Abstandes zum Untergrund beziehungsweise zum Pflanzenbewuchs vorgenommen. Dies wird vorzugsweise mittels der Höhenverstellungseinrichtung der Spritzeinrichtung erledigt. So kann eine vorzugsweise kontinuierliche Anpassung der tatsächlichen Spritzhöhe an den Untergrund, insbesondere an Bodenunebenheiten, sichergestellt werden, vorzugsweise durch eine Nachführung.

Die Spritzeinrichtung, vorzugsweise das Spritzgestänge, verfügt insbesondere über Sensoren, beispielsweise optische Sensoren und/oder Radarsensoren, besonders bevorzugt Ultraschallsensoren. Vorzugsweise ist wenigstens ein Sensor pro Seite der Spritzeinrichtung, insbesondere pro Gestängeseite, vorzugsweise zumindest zwei Sensoren pro Seite, vorgesehen. Diese dienen insbesondere zur Ermittlung des Abstands zum Erdboden und/oder zur Pflanzenoberkante. Die Sensoren, insbesondere Ultraschallsensoren, befinden sich hierfür vorzugsweise an der Unterkante des Spritzgestänges.

Die Regelung des Abstandes erfolgt dann vorzugsweise in folgenden Schritten, welche durch den Steuerungsrechner durchgeführt werden:
a) Ermitteln des momentanen Abstandes zwischen der Gestängeunterkante beziehungsweise der Ultraschallsensoren und der Pflanzenoberkante beziehungsweise dem Erdboden;
b) Abgleich des ermittelten momentanen Abstandes mit der gewählten beziehungsweise durch den Steuerungsrechner eingestellten Spritzhöhe als Sollabstand zwischen der Gestängeunterkante und dem Pflanzenbestand beziehungsweise dem Erdboden;
c) Ausgeben eines Steuersignals an eine Stellvorrichtung beziehungsweise einen Antrieb, insbesondere zumindest einen Hydraulikzylinder oder Pneumatikzylinder, zur Einstellung des gewünschten Abstandes zwischen dem Pflanzenbestand und/oder dem Erdboden und der Gestängeunterkante beziehungsweise den Ultraschallsensoren.

Mittels dieser wiederholt ausgeführter Regelungsschritte kann stets der in dem Steuerungsrechner ausgewählte Abstand beziehungsweise die gewählte Spritzhöhe durch einen Abgleich zwischen dem momentanen Ist-Abstand und dem gewählten Soll abstand eingestellt werden.

Die Regelung beeinflusst vorzugsweise nicht ausschließlich eine Höhenregelung des Gestänges sondern insbesondere zusätzlich eine Neigungsregelung. Hierfür ist das Gestänge vorzugsweise um eine in Fahrtrichtung liegende Drehachse drehbar gelagert. Wenigstens eine weitere Stellvorrichtung beziehungsweise ein weiterer Antrieb, insbesondere ein weiterer Hydraulik- oder Pneumatikzylinder, ist ausgebildet die Neigung des Spritzgestänges relativ zum Untergrund einzustellen. Der Steuerungsrechner ist zur Regelung der Neigung vorzugsweise derart ausgelegt, dass ungleichmäßige Abstände zwischen den Gestängeseiten durch eine Anpassung der Neigung des Spritzgestänges ausgeglichen werden. Hierbei wird insbesondere jeweils die eingestellte Spritzhöhe durch den Steuerungsrechner berücksichtigt.

Vorzugsweise ist die Neigungsregelung als vollaktive Regelung ausgebildet. Die Bewegung der Stellvorrichtung zur Neigungsregelung wird mit anderen Worten also direkt zwischen dem Gestänge und der Feldspritze beziehungsweise dem Rahmen der Feldspritze übertragen, ohne dass Dämpfungs- oder Federelemente zwischen einem, beiden oder mehreren Anlenkpunkten der Stellvorrichtung und dem Spritzgestänge beziehungsweise dem Fahrzeug angeordnet sind.

Vorzugsweise werden die Neigungsregelung und die Höhenregelung zusätzlich mit einer Regelung zur Dämpfung von Schwingungen des Gestänges in Fahrtrichtung kombiniert. Hierfür sind vorzugsweise Beschleunigungs- und/oder Geschwindigkeitssensoren am Gestänge angeordnet, vorzugsweise zumindest ein Sensor pro Seite der Spritzeinrichtung beziehungsweise pro Gestängeseite, insbesondere in möglichst großem Abstand zum Zentrum des Verteilergestänges, und ein Sensor im Zentrum des Gestänges. Der Steuerungsrechner ist zur Minimierung von Schwingungen des Gestänges in Fahrtrichtung vorzugsweise dazu ausgebildet, dass mittels eines weiteren Stellelements das Gestänge derart in Bewegung versetzt wird, dass die Differenz der gemessenen Beschleunigungen zwischen dem im Zentrum des Gestänges angeordneten Beschleunigungssensor und den äußeren Beschleunigungssensoren jeweils minimiert wird.

Die verschiedenen Regelungsvorgänge des Spritzgestänges können durch einen einzigen oder mehrere Steuerungsrechner durchgeführt werden. Mehrere Steuerungsrechner verfügen hierbei bevorzugt über eine Kommunikationsverbindung untereinander. Es kann auch vorgesehen sein, dass die Regelung mittels eines beispielsweise in einer Fahrerkabine installierten Terminals durchgeführt wird. Alternativ kann vorgesehen sein, dass die Einstellung von Regel- und Steuerparametern, wie das Auswählen der Benutzerprofile oder das Einstellen einer gewünschten Spritzhöhe, insbesondere für einen spezifischen Düsentyp, an einem Benutzerterminal durchgeführt wird und dieses in Kommunikationsverbindung mit einem oder mehreren Steuerungsrechnern steht. Diese Steuerungsrechner steuern dann wie beschrieben die Höhe, insbesondere in Abhängigkeit der ausgewählten Sprühdüsen, und/oder Neigung und/oder Schwingungseigenschaften des Verteilergestänges und/oder die Auswahl der verwendeten Sprühdüsen.

Die eingangs genannte Aufgabe wird außerdem gelöst durch eine Spritzvorrichtung, insbesondere eine Feldspritze, zum Ausbringen einer Spritzflüssigkeit auf einer insbesondere landwirtschaftlichen Fläche mit den Merkmalen des Anspruchs 15. Die Spritzvorrichtung ist insbesondere zur Ausführung eines Verfahrens nach einem der vorhergehenden Ansprüche ausgebildet. Sie ist mit wenigstens einem Spritzgestänge mit wenigstens einer, vorzugsweise mehreren Spritzdüsen für die Spritzflüssigkeit ausgestattet. Ein als Spritzhöhe bezeichneter Abstand der wenigstens einen Spritzdüse vom Untergrund beziehungsweise vom Pflanzenbewuchs ist dabei mittels wenigstens einer Höhenverstellungseinrichtung einstellbar. Die Spritzvorrichtung zeichnet sich erfindungsgemäß dadurch aus, dass die Spritzhöhe automatisch einstellbar ist. Damit wird erreicht, dass die Fehleranfälligkeit reduziert und die Genauigkeit beim Ausbringen erhöht werden.

Bevorzugt ist zur Einstellung der Spritzhöhe der wenigstens einen Spritzdüse beziehungsweise aller Spritzdüsen das gesamte Spritzgestänge in der Höhe verfahrbar. Damit wird die Einstellung der Spritzhöhe auf einfache Weise insgesamt ermöglicht anstatt dies beispielsweise einzeln für jede Spritzdüse durchzuführen zu müssen.

Die Höhenverstellungseinrichtung weist vorzugsweise wenigstens einen motorischen Antrieb auf, vorzugsweise einen hydraulischen und/oder pneumatischen Antrieb. Damit kann auf einfache und präzise Weise eine Verstellung der Spritzhöhe erfolgen.

Insbesondere ist die Spritzhöhe abhängig von insbesondere in einem Steuerungsrechner gespeicherten Daten automatisch ermittelbar und/oder einstellbar. Vorzugsweise erfolgt diese Ermittlung und/oder Einstellung bei einem Wechsel der aktiven Spritzdüsen. Ein Wechsel der Spritzdüsen und/oder wichtige Parameter der Spritzflüssigkeit oder der Umgebung, wie beispielsweise Viskosität, Dichte, Temperatur, wie auch Windrichtung und/oder Windgeschwindigkeit, ist vorzugsweise automatisch erfassbar, insbesondere mittels entsprechender Sensoren. Damit kann praktisch jederzeit eine korrekte Einstellung der Spritzhöhe sichergestellt werden.

Besonders bevorzugt ist eine Steuerscheibe zur Auswahl der aktiven Spritzdüsen vorgesehen. Die Steuerscheibe ist insbesondere elektromotorisch verstellbar, vorzugsweise verdrehbar. Damit lässt sich eine einzelne Spritzdüse beziehungsweise lassen sich mehrere Spritzdüsen einer Spritzdüseneinheit auf einfache Weise auswählen und aktivieren, also vorzugsweise öffnen, um Spritzflüssigkeit abzugeben. Die elektromotorische Ansteuerung erfolgt bevorzugt im Niedervoltbereich, vorzugsweise bei einer Spannung aus dem Bereich von zwischen -100 V und 100 V, besonders bevorzugt einer Spannung von 0 V bis 50 V, insbesondere bei 12 V. Die Änderung der aktivierten Düsen kann hierbei vorteilhaft mittels einer einzigen Steuerleitung pro Spritzdüseneinheit erfolgen. Bei einer parallelen Verstellung aller Düsen des Gestänges kann dies auch beispielsweise mit einer einzigen Steuerleitung pro Gestängeseite erfolgen. Die Änderung der aktivierten Düsen kann jedoch alternativ zur Spritzdüseneinheit, bei der mehrere Düsen in einem Düsenkörper zusammengefasst sind, auch mittels einer separaten Ansteuerung von unabhängigen Düsen erfolgen. Ebenfalls kann dies alternativ zum elektrischen Antrieb mittels eines hydraulischen oder pneumatischen Antriebs erfolgen.

Ausgehend von der eingestellten Spritzhöhe ist vorzugsweise eine aktive Regelung des Abstandes des Spritzgestänges beziehungsweise der Spritzdüsen zum Untergrund und/oder zum Pflanzenbewuchs mittels der Höhenverstellungseinrichtung der Spritzeinrichtung vorgesehen. Damit kann eine vorzugsweise kontinuierliche Anpassung an den Untergrund, insbesondere an Bodenunebenheiten, sichergestellt werden, vorzugsweise durch Nachführung.

Weitere bevorzugte Merkmale und Merkmalskombinationen sind den Unteransprüchen zu entnehmen. Dabei sind auch nicht explizit beschriebene Merkmalskombinationen umfasst, soweit sie technisch sinnvoll sind.

Ein bevorzugtes Ausführungsbeispiel der Erfindung wird im Folgenden anhand der Zeichnungen näher beschrieben. In diesen zeigen:
- Fig. 1: eine perspektivische Darstellung einer angehängten Spritzvorrichtung,
- Fig. 2: eine ausschnittsweise Darstellung des Spritzgestänges der Spritzvorrichtung mit Spritzfächern eines ersten Öffnungswinkels,
- Fig. 3: eine ausschnittsweise Darstellung des Spritzgestänges der Spritzvorrichtung mit Spritzfächern eines zweiten Öffnungswinkels,
- Fig. 4: das Spritzgestänge gemäß Fig. 2 in einer weiteren Darstellung der überlappenden Spritzfächer,
- Fig. 5: das Spritzgestänge gemäß Fig. 3 in einer weiteren Darstellung der überlappenden Spritzfächer,
- Fig. 6: eine Bildschirmansicht einer Steuerungseinheit im Modus für die Düsenkörperkonfiguration,
- Fig. 7: eine Bildschirmansicht der Steuerungseinheit im Modus für die detaillierte Düsenkörperkonfiguration, und
- Fig. 8: eine Bildschirmansicht der Steuerungseinheit im Modus für die Maschinensteuerung.

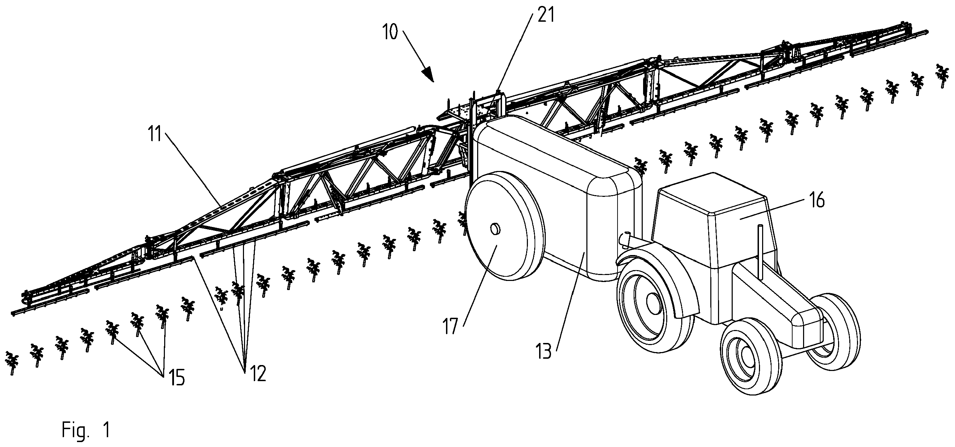

In der Fig. 1 ist eine Feldspritze 10 als ein Beispiel einer erfindungsgemäßen Spritzvorrichtung gezeigt. Diese weist ein Spritzgestänge 11 mit einer Vielzahl Spritzdüsen 12 auf. Die Spritzvorrichtung 10 weist hier in üblicher Weise außerdem einen Vorratstank 13 für eine auf einem Untergrund 14 beziehungsweise darauf befindlichem Pflanzenbewuchs 15 auszubringende Spritzflüssigkeit auf.

Es handelt sich im gezeigten Beispiel um eine sogenannte angehängte Feldspritze 10. Demnach ist diese Spritzvorrichtung an ein Zugfahrzeug 16 angehängt. Am Vorratstank 13 ist in diesem Fall zusätzlich ein Fahrwerk mit zwei Stützrädern 17 vorgesehen, um das Gewicht der Feldspritze 10 einschließlich der Spritzflüssigkeit auf dem Untergrund 14 abzustützen.

Die Spritzflüssigkeit wird aus dem wenigstens einen Vorratstank 13 zu den Spritzdüsen 12 gefördert. Bei Aktivierung der Spritzdüse 12 verlässt die Spritzflüssigkeit die Spritzdüse 12 und wird in Form eines Spritzfächers 18 abgegeben. Damit wird grundsätzlich eine möglichst homogene Verteilung der Spritzflüssigkeit auf einem Flächenabschnitt des Untergrunds erreicht.

Je nach Konstruktion der Spritzdüse 12 kann ein mehr oder weniger großer Raumbereich mit dieser Düse 12 abgedeckt werden. Insbesondere unterscheiden sich die Spritzdüsen 12 im Öffnungswinkel 19 des Spritzfächers 18. Durch verschieden große Öffnungswinkel 19 kann eine unterschiedliche breite Verteilung der Spritzflüssigkeit erreicht werden. Auch kann durch verschiedene Querschnitte der Düsenöffnung beziehungsweise der Düsenöffnungen der Durchsatz der Spritzdüse 12 variiert werden. Es kann ebenso durch verschiedenartige Konstruktion der Spritzdüsen die Tropfenbildung an die jeweiligen Erfordernisse und Gegebenheiten, wie beispielsweise Leitungsdruck, angepasst werden.

Um verschiedene Spritzflüssigkeiten mit unterschiedlichen Eigenschaften und für verschiedene Bedarfsfälle bestmöglich ausbringen zu können, sind üblicherweise mehrere unterschiedliche Spritzdüsen 12 für eine Spritzvorrichtung vorgesehen. Diese können auswechselbar befestigt sein, so dass ein manueller Austausch erfolgen kann. Es können auch mehrere umschaltbare Spritzdüsen 12 vorgesehen sein. In diesem Fall kann maschinell und/oder automatisch zwischen den verschiedenen Düsen 12 umgeschaltet werden.

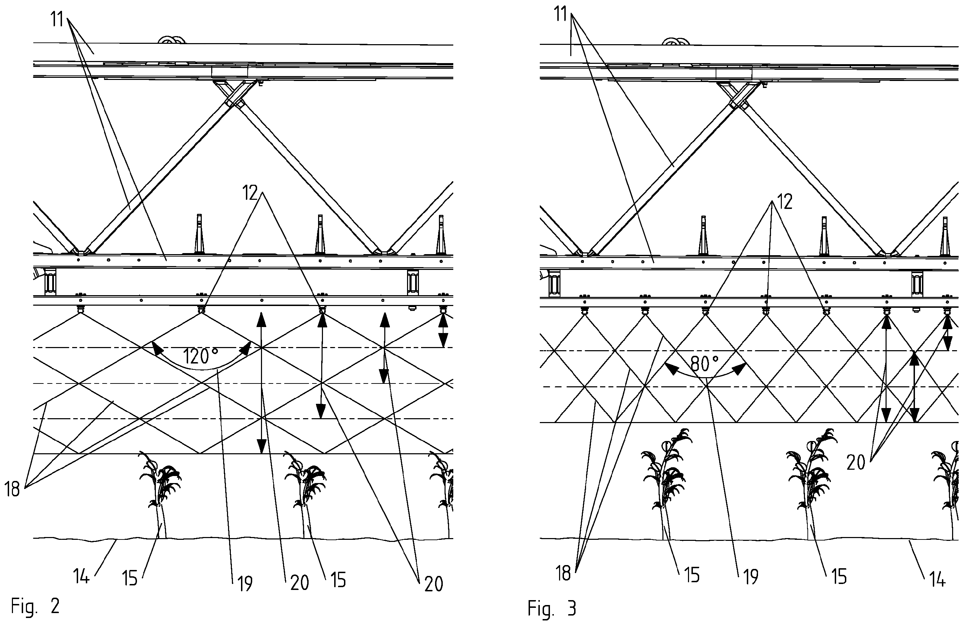

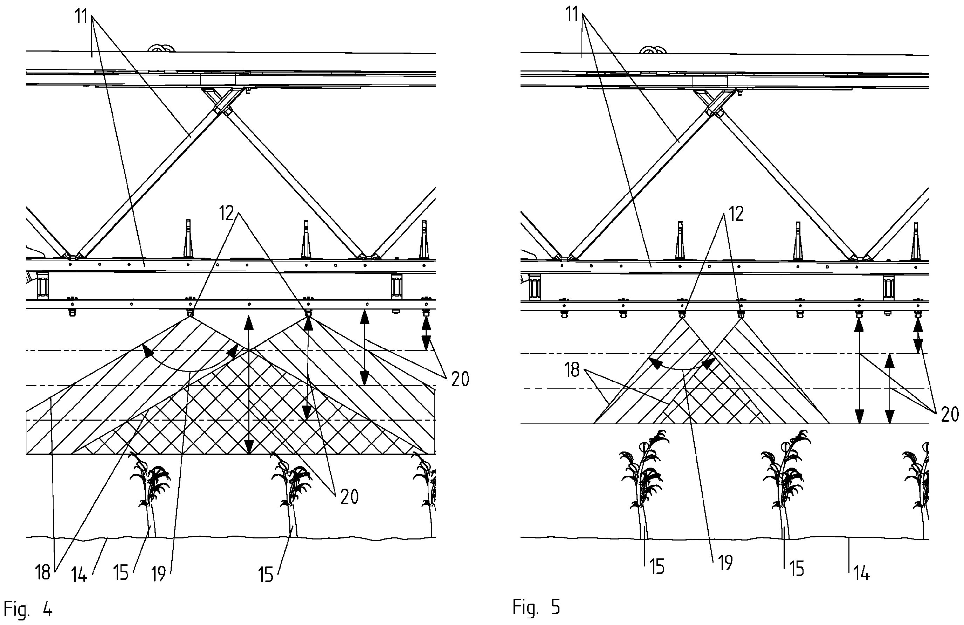

Aufgrund der in jedem Fall in räumlicher Nähe zueinander und typischerweise nebeneinander am Spritzgestänge 11 angeordneten Spritzdüsen 12 überlappen sich die Spritzfächer 18. Dies ist beispielhaft in den Fig. 2 bis 5 gezeigt. Hier können direkt benachbarte Spritzdüsen 12 unmittelbar überlappende Spritzfächer 18 ausbilden. Aber auch übernächste Nachbarn oder sogar noch weiter entfernte Spritzfächer 18 der Spritzdüsen 12 können überlappen, sofern der Abstand zum Untergrund beziehungsweise den Pflanzen 15 hinreichend groß ist. Bei größerem Abstand nimmt aber einerseits die Genauigkeit ab, insbesondere witterungsbedingt oder auch windbedingt. Aber auch ein teilbreitenspezifisches Ausbringen wird durch größere Abstände wesentlich ungenauer.

Der Umfang der Überlappung hängt von mehreren Faktoren ab. Beispielsweise spielt die Bauart der Spritzdüse 12 und die daraus resultierende Form des Spritzfächers 18 wie auch dessen Öffnungswinkel 19 eine wesentliche Rolle. Naturgemäß stellt der horizontale Abstand der Düsen 12 ein fundamentales Kriterium dar. Aber auch der Durchsatz beziehungsweise der Druck der Spritzflüssigkeit sind wesentliche Einflussfaktoren. Gegebenenfalls lassen sich die Spritzdüsen 12 auch alternierend zu- und abschalten, um die tatsächliche Überlappung zu variieren.

Abhängig vom Abstand der Spritzdüsen 12 vom Untergrund 14 beziehungsweise vom Pflanzenbewuchs 15, der sogenannten Spritzhöhe 20, kommt es zu deutlichen Unterschieden in der lokalen Ausbringmenge. Abhängig von der Spritzhöhe 20 kommt es nämlich insbesondere zu einer mehrfachen Überlappung der Spritzfächer 18. Daher ist dieser Effekt bei der Steuerung der Spitzeinrichtung einzubeziehen. Darüber hinaus variieren die Ausbringraten noch deutlich in Abhängigkeit von der Auswahl der aktiven Spritzdüsen 12 und dem Durchsatz an Spritzmittel bei einer gegebenen Spritzhöhe 20.

Demnach wird die Spritzhöhe 20 üblicherweise manuell vom menschlichen Bediener der Spritzeinrichtung 10 an der Maschine, also der Feldspritze 10, eingestellt. Dabei muss sich der Bediener auf seine Kenntnisse und die Erfahrung mit der speziellen Düsenart 12 beziehungsweise der konkreten Spritzflüssigkeit verlassen. Auch führen sowohl fehlerhafte Eingaben der Spritzhöhe 20 wie auch ein Unterbleiben der Einstellung beispielsweise bei einem Wechsel der Spritzdüsen 12 zu erheblichen Risiken bei der Ausbringung der Spritzflüssigkeit beispielsweise im Hinblick auf Wirksamkeit und Umweltgefährdung.

Erfindungsgemäß erfolgt diese Einstellung automatisch in Abhängigkeit von den Eigenschaften der eingestellten beziehungsweise ausgewählten Spritzdüse 12 durch eine erfindungsgemäße Spritzeinrichtung, wie die hier gezeigte Feldspritze 10, beziehungsweise durch einen Steuerungsrechner derselben.

Ein Wechsel der Spritzdüsen ist vorzugsweise automatisch erfassbar, insbesondere mittels entsprechender Sensoren oder durch Abfrage des Status in der Steuerungseinrichtung. Außerdem lassen sich Eigenschaften der Spritzflüssigkeit oder der Umgebung, wie beispielsweise Viskosität, Dichte, Temperatur, aber auch von Windrichtung und/oder Windgeschwindigkeit, berücksichtigen. Diese sind gegebenenfalls auch mittels geeigneter Sensoren messbar oder aus externen Quellen zu beziehen. Damit kann praktisch jederzeit eine korrekte Einstellung der Spritzhöhe sichergestellt werden.

Dabei wird eine Höhenverstelleinrichtung 21 verwendet, die dazu dient, den Abstand des Gestänges 11 vom Untergrund 14, insbesondere dem Erdboden, oder auch von den Pflanzen 15 einzustellen. Diese Einstellung erfolgt im Stand der Technik durch manuelle Eingabe durch einen Bediener. Hier wird die Einstellung automatisch vorgenommen. Dazu wird die aktivierte Spritzdüse zugrunde gelegt und dann der entsprechende voreingestellte oder auch anhand von vorliegenden Daten berechnete Wert der Spritzhöhe 20 eingestellt. Hierbei kann vorgesehen sein, dass ebenfalls berücksichtigt wird, welcher Überlappungsgrad mit den einzustellenden oder eingestellten Düsen 12 angewendet werden soll, beispielsweise 1-fach, 2-fach, 3-fach usw, und die Spritzhöhe dementsprechend angepasst wird. Vorzugsweise wird diese Wahl anhand der gewünschten Ausbringrate der Spritzflüssigkeit durchgeführt.

Diese Höhenverstelleinrichtung 21 ist außerdem dazu geeignet, eine Nachführung des Spritzgestänges 11 durchzuführen. Beispielsweise kann sich bei Unebenheiten im Untergrund 14 der Abstand des Gestänges 11 vom Untergrund 14 vergrößern oder verkleinern. Dies kann durch Nachregelung mittels der Höhenverstelleinrichtung 21 ausgeglichen werden. Hierzu dient insbesondere eine aktive Regelung anhand von Messwerten entsprechender Sensoren am Gestänge 11 und/oder der Verteilmaschine 13 bzw. des Traktors 16.

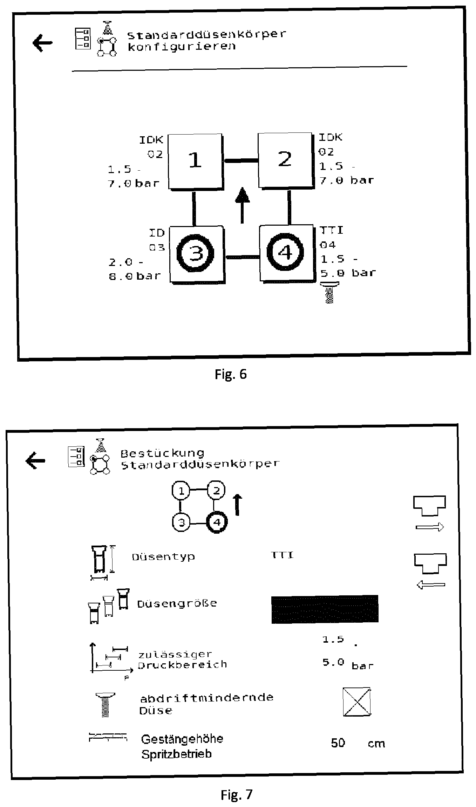

Aus den Figuren 6 bis 8 geht eine beispielhafte Steuerung für eine erfindungsgemäße Spritzeinrichtung, wie beispielsweise eine Feldspritze 10 hervor. Dazu sind in den Figuren 3 bis 8 jeweils Bildschirmdarstellungen einer Steuerungseinrichtung, wie beispielsweise eines Terminals, in verschiedenen Modi gezeigt. Ein derartiges Terminal ist vorzugsweise mit einem Bussystem der zu steuernden Maschine gekoppelt, beispielsweise ISOBUS.

In Fig. 6 ist eine Ansicht einer Bildschirmdarstellung zur Konfiguration der Spritzdüsen 12 zu sehen. Die Auswahl und Aktivierung der Düsen ist erkennbar. Die aktiven Düsen 3 und 4 tragen hier eine deutlich sichtbare kreisförmige Markierung. Deren zulässige Druckbereiche sind jeweils angegeben wie auch der Düsentyp, nämlich hier beispielsweise IDK, ID, TTI. Gegebenenfalls bei der Berechnung der Spritzhöhe 20 kann auch berücksichtigt werden, wenn eine spezielle winddriftarme Düse 12 verwendet wird.

In der Fig. 7 ist die Bildschirmdarstellung für die Konfiguration einer einzelnen Spritzdüse 12 gezeigt. Neben Düsentyp, Düsengröße und Druckbereich ist hier vor allem die Gestängehöhe für den Spritzbetrieb (hier 50 cm) festzulegen, also die Spritzhöhe 20. Hier kann die Spritzhöhe 20 demnach in einer Weise festgelegt werden, um diese automatisch in Abhängigkeit von der Auswahl der jeweiligen Düse 12 einstellen und gegebenenfalls regeln zu können.

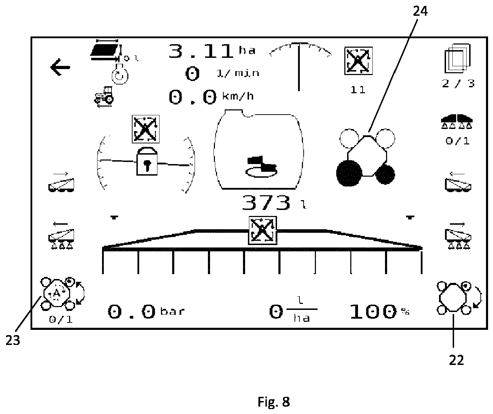

Fig. 8 zeigt schließlich noch eine Übersichtsdarstellung der Maschinensteuerung. Dort sind die aktuell aktvierten Teilbreiten wie auch die Ausbringmenge und eine Reihe weiterer Daten abzulesen und gegebenenfalls einzustellen. Insbesondere ist rechts unten ein Symbol 22 bezüglich manuellen Auswahl der verwendeten Spritzdüse dargestellt. Durch Berühren dieses Symbols auf einem Berührungsempfindlichen Bildschirm oder Aktivieren eines diesem Symbol 22 zugeordneten Knopfes werden vorzugsweise in einer festgelegten Reihenfolge die vorhandenen Düsentypen durchgeschaltet. Die jeweils aktive Düse bzw. aktiven Düsen sind an der Darstellung des Symbols 24 jeweils erkennbar.

Alternativ oder zusätzlich kann vorgesehen sein, dass eine automatische Auswahl der Düsen anhand in dem Speicher des Steuerungsrechners hinterlegter Druckbereiche oder Grenzdrücke durch den Steuerungsrechner vorgenommen wird. Diese Funktionalität kann durch Aktivieren des Symbols 23 aufgerufen werden. Beispielsweise kann für jede Düse der jeweils optimale Druckbereich in den Steuerungsrechner eingegeben werden. Fällt der aktuelle Druck aus dem optimalen Druckbereich der gerade ausgewählten Düse heraus, wird die Düseneinheit durch den Steuerungsrechner entsprechend der hinterlegten Druckbereiche derart angesteuert, dass nun die für den aktuellen Druck optimale Düse für das Ausbringen der Spritzflüssigkeit verwendet wird.

Die hier gezeigten Bildschirmdarstellungen sind exemplarisch für eine mögliche Bedienoberfläche zu sehen. Grundsätzlich lassen sich die Daten selbstverständlich auch in anderer Form präsentieren und modifizieren.

### Bezugszeichen

Feldspritze 10
Spritzgestänge 11
Spritzdüse 12
Vorratstank 13
Untergrund 14
Pflanzenbewuchs 15
Zugfahrzeug 16
Stützrad 17
Spritzfächer 18
Öffnungswinkel 19
Spritzhöhe 20
Höhenverstelleinrichtung 21
Symbol manuelle Düsenwahl 22
Symbol automatische Düsenwahl 23
Symbol aktivierte Düse 24

## Patentansprüche

1. Verfahren zum Ausbringen einer Spritzflüssigkeit auf einer insbesondere landwirtschaftlichen Fläche, mit einer Spritzvorrichtung, insbesondere Feldspritze (10), mit wenigstens einem Spritzgestänge (11) mit wenigstens einer, vorzugsweise mehreren Spritzdüsen (12) für die Spritzflüssigkeit, wobei ein als Spritzhöhe (20) bezeichneter Abstand der wenigstens einen Spritzdüse (12) vom Untergrund (14), insbesondere Erdboden, beziehungsweise vom Pflanzenbewuchs (15) mittels wenigstens einer Höhenverstellungseinrichtung (21) eingestellt wird, **dadurch gekennzeichnet, dass** die Spritzhöhe (20) automatisch in Abhängigkeit von Eigenschaften der wenigstens einen aktiven Spritzdüse (12) eingestellt wird.

2. Verfahren nach Anspruch 1, **dadurch gekennzeichnet, dass** die Spritzhöhe durch die Spritzvorrichtung eingestellt wird, vorzugsweise durch Verstellen der wenigstens einen Höhenverstellungseinrichtung.

3. Verfahren nach Anspruch 1, **dadurch gekennzeichnet, dass** die Spitzhöhe abhängig von den aktiven Spritzdüsen, insbesondere den Spritzfächern der aktiven Spritzdüsen, eingestellt wird.

4. Verfahren nach einem der vorhergehenden Ansprüche, **dadurch gekennzeichnet, dass** die Spitzhöhe abhängig vom Druck der Spritzflüssigkeit und/oder von der Ausbringmenge und/oder der Durchflussrate eingestellt wird.

5. Verfahren nach einem der vorhergehenden Ansprüche, **dadurch gekennzeichnet, dass** die Einstellung der Spritzhöhe motorisch erfolgt, vorzugsweise durch wenigstens einen hydraulischen und/oder pneumatischen Antrieb.

6. Verfahren nach einem der vorhergehenden Ansprüche, **dadurch gekennzeichnet, dass** bei einer Änderung der aktivierten Spitzdüsen automatisch eine Einstellung beziehungsweise Anpassung der Spritzhöhe erfolgt, wobei vorzugsweise die Spritzdüsen mittels einer insbesondere drehbar gelagerten Steuerscheibe ausgewählt und/oder aktiviert werden und/oder wobei vorzugsweise die Spritzdüsen elektrisch und/oder hydraulisch und/oder pneumatisch ausgewählt und/oder aktiviert werden, besonders bevorzugt elektromotorisch.

7. Verfahren nach einem der vorhergehenden Ansprüche, **dadurch gekennzeichnet, dass** die Spritzhöhe anhand gespeicherten Daten ermittelt und/oder eingestellt wird, vorzugsweise anhand von in der Spritzeinrichtung beziehungsweise in wenigstens einem Steuerungsrechner der Spritzeinrichtung gespeicherter Daten, wobei einer oder mehrere Werte für die Spritzhöhe hinterlegt sein können, vorzugsweise für eine unterschiedliche Anzahl an Überlappungen von Spritzfächern.

8. Verfahren nach einem der vorhergehenden Ansprüche, **dadurch gekennzeichnet, dass** in der Spritzeinrichtung beziehungsweise in wenigstens einem Steuerungsrechner mehrere Profile, insbesondere als Benutzerprofile gespeichert sind, wobei vorzugsweise in jedem Profil separat zumindest die für die Einstellung der Spritzhöhen erforderlichen Daten gespeichert werden und/oder wobei vorzugsweise zwischen den Benutzerprofilen automatisch und/oder manuell umgeschaltet wird.

9. Verfahren nach einem der vorhergehenden Ansprüche, **dadurch gekennzeichnet, dass** ausgehend von der eingestellten Spritzhöhe eine aktive Regelung des Abstandes zum Untergrund beziehungsweise zum Pflanzenbewuchs vorgenommen wird, vorzugsweise mittels der Höhenverstellungseinrichtung der Spritzeinrichtung.

10. Verfahren nach einem der vorhergehenden Ansprüche, **dadurch gekennzeichnet, dass** der Abstand zum Erdboden und/oder zur Pflanzenoberkante ermittelt wird, insbesondere mittels Sensoren im Bereich der Spritzeinrichtung, vorzugsweise des Spritzgestänges, beispielsweise optischer Sensoren und/oder Radarsensoren, besonders bevorzugt Ultraschallsensoren, wobei vorzugsweise wenigstens ein Sensor pro Seite der Spritzeinrichtung, insbesondere pro Gestängeseite, vorzugsweise zumindest zwei Sensoren pro Seite, vorgesehen sind.

11. Verfahren nach einem der vorhergehenden Ansprüche, **dadurch gekennzeichnet, dass** die Regelung des Abstandes in folgenden Schritten, welche durch den Steuerungsrechner durchgeführt werden, erfolgt, wobei vorzugsweise durch die insbesondere wiederholt ausgeführten Schritte der ausgewählte Abstand beziehungsweise die gewählte Spritzhöhe durch einen Abgleich zwischen dem momentanen Ist-Abstand und dem gewählten Sollabstand eingestellt wird:
a) Ermitteln des momentanen Abstandes zwischen der Gestängeunterkante beziehungsweise der Ultraschallsensoren und der Pflanzenoberkante beziehungsweise dem Erdboden;
b) Abgleich des ermittelten momentanen Abstandes mit der gewählten beziehungsweise durch den Steuerungsrechner eingestellten Spritzhöhe als Sollabstand zwischen der Gestängeunterkante und dem Pflanzenbestand beziehungsweise dem Erdboden;
c) Ausgeben eines Steuersignals an eine Stellvorrichtung beziehungsweise einen Antrieb zur Einstellung des gewünschten Abstandes zwischen dem Pflanzenbestand und/oder dem Erdboden und der Gestängeunterkante beziehungsweise den Ultraschallsensoren.

12. Verfahren nach einem der vorhergehenden Ansprüche, **dadurch gekennzeichnet, dass** zusätzlich zur Höhenregelung des Gestänges auch eine Neigungsregelung vorgenommen wird, wobei das Gestänge vorzugsweise um eine in Fahrtrichtung liegende Drehachse drehbar gelagert ist, so dass die Neigung des Spritzgestänges relativ zum Untergrund eingestellt wird, vorzugsweise unter Berücksichtigung der eingestellten Spritzhöhe.

13. Verfahren nach einem der vorhergehenden Ansprüche, **dadurch gekennzeichnet, dass** die Neigung des Spritzgestänges vollaktiv geregelt wird, derart, dass die Bewegung der Stellvorrichtung zur Neigungsregelung direkt zwischen dem Gestänge und der Feldspritze beziehungsweise dem Rahmen der Feldspritze übertragen wird, ohne dass Dämpfungs- oder Federelemente zwischen einem, beiden oder mehreren Anlenkpunkten der Stellvorrichtung und dem Spritzgestänge beziehungsweise dem Fahrzeug angeordnet sind.

14. Verfahren nach einem der vorhergehenden Ansprüche, **dadurch gekennzeichnet, dass** eine Regelung zur Dämpfung von Schwingungen des Gestänges in Fahrtrichtung durchgeführt wird, wobei vorzugsweise Sensoren am Gestänge angeordnet sind, vorzugsweise zumindest ein Sensor pro Seite der Spritzeinrichtung beziehungsweise pro Gestängeseite, so dass das Gestänge in Fahrtrichtung mittels eines weiteren Stellelements in Bewegung versetzt werden kann, um so eine Minimierung von Schwingungen des Gestänges durch eine Minimierung der gemessenen Beschleunigung zu erreichen.

15. Spritzvorrichtung, insbesondere Feldspritze, zum Ausbringen einer Spritzflüssigkeit auf einer insbesondere landwirtschaftlichen Fläche, insbesondere zur Ausführung eines Verfahrens nach einem der vorhergehenden Ansprüche, mit wenigstens einem Spritzgestänge mit wenigstens einer, vorzugsweise mehreren Spritzdüsen für die Spritzflüssigkeit, wobei ein als Spritzhöhe bezeichneter Abstand der wenigstens einen Spritzdüse vom Untergrund beziehungsweise vom Pflanzenbewuchs mittels wenigstens einer Höhenverstellungseinrichtung einstellbar ist, **dadurch gekennzeichnet, dass** die Spritzhöhe automatisch in Abhängigkeit von Eigenschaften der wenigstens einen aktiven Spritzdüse einstellbar ist.

16. Spritzvorrichtung nach Anspruch 15, **dadurch gekennzeichnet, dass** zur Einstellung der Spritzhöhe der wenigstens einen Spritzdüse beziehungsweise aller Spritzdüsen das gesamte Spritzgestänge in der Höhe verfahrbar ist.

17. Spritzvorrichtung nach Anspruch 15 oder 16, **dadurch gekennzeichnet, dass** die Höhenverstellungseinrichtung wenigstens einen motorischen Antrieb aufweist, vorzugsweise einen hydraulischen und/oder pneumatischen Antrieb.

18. Spritzvorrichtung nach einem der Ansprüche 15 bis 17, **dadurch gekennzeichnet, dass** die Spritzhöhe abhängig von insbesondere in einem Steuerungsrechner gespeicherten Daten automatisch ermittelbar und/oder einstellbar ist, vorzugsweise bei einem Wechsel der aktiven Spritzdüsen.

19. Spritzvorrichtung nach einem der Ansprüche 15 bis 18, **dadurch gekennzeichnet, dass** eine Steuerscheibe zur Auswahl der aktiven Spritzdüsen vorgesehen ist, wobei die Steuerscheibe insbesondere elektromotorisch verstellbar ist, vorzugsweise verdrehbar.

20. Spritzvorrichtung nach einem der Ansprüche 15 bis 19, **dadurch gekennzeichnet, dass** ausgehend von der eingestellten Spritzhöhe eine aktive Regelung des Abstandes des Spritzgestänges beziehungsweise der Spritzdüsen zum Untergrund und/oder zum Pflanzenbewuchs mittels der Höhenverstellungseinrichtung der Spritzeinrichtung vorgesehen ist.
